# EUROPEAN PATENT SPECIFICATION

(11) **EP 2 706 705 B1**
(45) Date of publication and mention of the grant of the patent: **04.11.2015**
(21) Application number: 12306070.9
(22) Date of filing: 07.09.2012
(51) Int. Cl.: H04L 12/437, H04L 12/26

(54) **Connectivity checking of a bidirectional circular path in a communication network**
Konnektivitätsprüfung eines bidirektionalen Kreispfads in einem Kommunikationsnetzwerk
Contrôle de connectivité d'un trajet circulaire bidirectionnel dans un réseau de communication

(43) Date of publication of application: 12.03.2014
(73) Proprietor: ALCATEL LUCENT, 92100 Boulogne-Billancourt (FR)
(72) Inventor: Addeo, Christian, 33170 PORDENONE (IT); Busi, Italo, 20023 CERRO MAGGIORE (MI) (IT)
(74) Representative: Wetzel, Emmanuelle

(56) References cited:
- US-A1- 2010 238 812
- Sivabalan S., et al.: "Definition of Time-to-live TLV for LSP-Ping Mechanisms, draft-ietf-mpls-lsp-ping-ttl-tlv-02.txt", IETF , 7 March 2012 (2012-03-07), XP002692087, Retrieved from the Internet: URL:http://tools.ietf.org/id/draft-ietf-mp ls-lsp-ping-ttl-tlv-02.txt [retrieved on 2013-02-13]
- H. van Helvoort, et al.: "MPLS-TP Ring Protection Switching (MRPS), draft-helvoort-mpls-tp-ring-protection-swi tching-02.txt", IETF , 7 April 2012 (2012-04-07), XP002692088, Retrieved from the Internet: URL:http://tools.ietf.org/id/draft-helvoor t-mpls-tp-ring-protection-switching-02.txt [retrieved on 2013-02-13]

## Description

### Technical field

The present invention relates to the field of communication networks. More particularly, the present invention relates to a method for checking connectivity of a bidirectional circular path (in particular, but not exclusively, a bidirectional circular protection path) in a communication network (in particular, but not exclusively, an MPLS or MPLS-TP network).

### Background art

As known, in a packet-switched communication network each user traffic flow is divided into packets which are routed from a source node to a destination node along a path comprising one or more intermediate nodes connected by links.

In an MPLS (Multi-Protocol Label Switching) network, as defined by the IETF RFC 3031 (January 2001), the path followed by the packets carrying a given user traffic flow through the network is called Label Switched Path (briefly, LSP) and is allocated before the packet transmission.

Each MPLS packet comprises a header, in turn comprising at least one label. Each label comprises, *inter alia,* a 20-bit label value and an 8-bit TTL (Time To Live) field. Packets carrying a certain user traffic flow comprise a label value which identifies the LSP along which such packets shall be transmitted. Each intermediate node of the LSP determines the next hop to which the packets shall be forwarded based on the label value of the received packets. Each intermediate node also typically performs a so-called "label swapping", namely it replaces the label value of the received packets with a further label value which is also associated to the same LSP. Besides, the TTL field indicates the maximum number of hops through which the packets shall be transmitted before being terminated and processed. Each intermediate node of an LSP reads the TTL field of the received packets. If its value is higher than 1, the node decreases it by 1 and forwards the packet to the next hop based on the label value. If the value of the TTL field is equal to or lower than 1, the node terminates the packet. Hence, a packet is terminated either when it reaches the destination node or when its TTL expires.

A particular version of MPLS, which is termed MPLS-TP (MPLS Transport Profile), is employed as a network layer technology for transport networks.

Both MPLS and MPLS-TP provide for a set of OAM (Operation, Administration and Management) functions allowing to check the integrity or connectivity of LSPs, the transmission performance of LSPs, or the like. In particular, the OAM functions supported by MPLS-TP are defined by the IETF RFC 6371 (September 2011).

According to such specification, the source node and the destination node of an LSP to be monitored are provided with respective maintenance end points (briefly, MEPs) which are capable of originating and terminating OAM packets.

Maintenance intermediate points (briefly, MIPs) may be provided between the MEPs at the intermediate nodes of the LSP. A MIP typically transparently forwards the OAM packets exchanged between MEPs. Besides, a MIP may also terminate and process OAM packets received from an originating MEP and generate an OAM packet in reaction to a received OAM packet. However, according to the IETF RFC 6371, a MIP never generates unsolicited OAM packets or, in other words, can not spontaneously originate any OAM packet. When sending an OAM packet to a target MIP, the originating MEP sets the TTL field of the OAM packet header to indicate the number of hops necessary to reach the node where the target MIP resides.

The OAM functions specified by the IETF RFC 6371 comprise an on-demand Connectivity Verification (briefly, CV) function that allows to check the connectivity between an originating MEP and a target MEP or MIP. When on-demand CV is invoked, the originating MEP issues a sequence of CV OAM packets. The number of CV OAM packets and their transmission rate are pre-configured to take into account the packet-loss condition of the LSP to be checked. The target MEP or MIP shall return a reply CV OAM packet for each CV OAM packet received. If the expected number of reply CV OAM packets is not received at the originating MEP, this is an indication that a connectivity problem exists. MIPs that are not targeted by the CV OAM packets do not process such packets and transparently forward them.

The communication between originating MEP and target MEP or MIP may be based on different protocols, such as LSP-Ping as defined by RFC 4379 (February 2006) or OAM Loopback LBM/LBR (Loopback Message/Loopback Reply) as defined by the ITU-T Recommendation G.8113.1 (May 2011), par. 8.2.2 and clause 9.1.2.

Further, the Internet-Draft "Definition of Time-to-live TLV for LSP-Ping Mechanisms, draft-ietf-mpls-lsp-ping-ttl-tlv-02.txt" (March 7, 2012) describes a modification of the LSP-Ping protocol enabling a MIP provided at an intermediate node of a path to originate and transmit CV OAM packets (or echo request packets, according to the LSP-Ping terminology) to a target MEP or MIP and receive corresponding reply CV OAM packets (or echo reply packets, according to the LSP-Ping terminology). In particular, the originating MIP adds to each echo request packet an additional TLV (Type, Length, Value) field to inform the target MEP or MIP of how many hops away the originating MIP is on the path to be checked. When the target MEP or MIP receives the echo request packets, it must set the TTL field of the echo reply packets equal to the value of the TLV field comprised in the received echo request packets. This way, the echo reply packets may reach and be terminated at the originating MIP.

MPLS and MPLS-TP networks may have various topologies, including a ring topology. In particular, the Internet-Draft "MPLS-TP Ring Protection Switching (MRPS), draft-helvoort-mpls-tp-ring-protection-switching-02.txt" (April 7, 2012) defines an MPLS-TP Ring Protection Switching (in brief, MRPS) mechanism allowing to protect traffic transmitted over an MPLS-TP network comprising a number of nodes connected by links according to a ring topology. In particular, the links form two counter-rotating rings, namely a clockwise ring and a counterclockwise ring. The bandwidth of each ring is divided into a working bandwidth dedicated to working LSPs and a protection bandwidth dedicated to protection LSPs. The protection LSP(s) of one ring may be used to protect working LSP(s) of the other ring in case of failure.

In particular, it is known providing a single, circular bidirectional protection path shared among all the working LSPs allocated in the network. Such circular bidirectional protection path comprises two counter-rotating unidirectional circular protection LSPs, one for each ring of the network. Each protection LSP runs through all the nodes of the network, without any predefined source node or destination node. Each protection LSP has allocated a respective protection bandwidth and a respective protection label value for each link of the ring. The two counter-rotating protection LSPs with their protection bandwidths and their protection label values are permanently provisioned, and are accordingly unused in normal operative conditions. In case of a link or node failure, traffic transmitted by the affected working LSP(s) may be switched to any of the protection LPSs, e.g. according to a wrapping protection scheme.

According to the wrapping protection scheme, in an exemplary case of a unidirectional failure affecting a link of the clockwise ring, the node immediately upstream the failed link switches all the MPLS packets coming from working LSP(s) allocated on the clockwise ring and directed to the failed link to the protection LSP allocated on the counterclockwise ring. These packets travel along the protection LSP allocated on the counterclockwise ring until they reach the node immediately downstream the failed link (according to the original traffic direction before the failure). Then, this node switches such packets back to their working LSP(s) allocated on the clockwise ring.

### Summary of the invention

The inventors have noticed that it is desirable, after the protection LSPs have been configured, checking their connectivity, namely checking whether the protection label values associated to the protection LSPs and the cross-connections linking the various hops of the protection LSPs are correctly configured at the nodes of the communication network.

This allows ensuring that, when a failure occurs which affects one or more working LSPs, the protections LSPs are ready for supporting the above described wrapping protection scheme.

However, disadvantageously, current OAM functions as defined by the above cited IETF RFC 6371 do not allow checking the connectivity of the protection LSPs. Indeed, as discussed above, only a MEP may initiate an exchange of CV OAM packets. However, as discussed above, the two counter-rotating protection LSPs are circular paths, and hence - during normal operation - do not comprise any predefined source or destination node at which a MEP may be provided.

On the other hand, although the above mentioned TLV field enables a MIP to initiate an exchange of CV OAM packets with a target MEP or MIP, it disadvantageously requires that the target MEP or MIP is configured to process and understand such TLV field, namely to support the modified LSP-Ping protocol which provides for this additional field. If the target MEP or MIP is not capable of processing and understanding the TLV field comprised in the received CV OAM packets, it is disadvantageously not capable of properly setting the value of the TTL field of the reply CV OAM packets for targeting the originating MIP.

In view of the above, the Applicant has faced the problem of providing a method for checking connectivity of a bidirectional circular path (in particular, a bidirectional circular protection LSP) in a communication network (in particular, but not exclusively, an MPLS or MPLS-TP ring network) which overcomes the aforesaid drawbacks, namely which may be initiated by any MIP associated to the path and which may be implemented by the known protocols currently supporting communication between originating MEPs and target MEPs or MIPs, without requiring any modification.

In the following description and in the claims, the expression "circular path" will designate a path allocated through a number of nodes of a communication network in such a way that the path crosses (namely, it enters and exits) each one of said number of nodes. The circular path may be allocated in a ring network, so that it crosses all the nodes of the ring network. Alternatively, the circular path may be allocated in ring sub-network of a network having e.g. a meshed topology.

According to a first aspect, the present invention provides a method for checking connectivity of a bidirectional circular path provided in a communication network comprising a number N of nodes connected according to a ring topology, the bidirectional circular path comprising a first unidirectional circular path and a second counter-rotating unidirectional circular path, at least one node of the number N of nodes being provided with topology information relating to the communication network, the method comprising, at the node:
a) generating a connectivity check packet comprising a first time to live field and setting the first time to live field based on the topology information;
b) transmitting the connectivity check packet from a first side of the node along the first unidirectional circular path;
c) receiving the connectivity check packet at a second opposite side of the node from the first unidirectional circular path;
d) in response to the connectivity check packet, generating a connectivity check response packet comprising a second time to live field and setting the second time to live field based on the topology information in an autonomous way without using any information contained in the connectivity check packet; and
e) transmitting the connectivity check response packet from the second side of the node opposite to the first side of the node, along the second counter-rotating unidirectional circular path. Preferably, the topology information comprise the number N.

Alternatively, the topology information comprise a sequential list of the number N of nodes.

Preferably, the method further comprises providing the topology information to the at least one node upon deployment of the communication network.

Preferably, step a) comprises setting the first time to live field equal to the number N and wherein step d) comprises setting the second time to live field equal to the number N.

According to preferred embodiments, the node comprises an originating maintenance intermediate point located at the first side of the node and a target maintenance intermediate point located at the second opposite side of the node, steps a) and b) being performed by the originating maintenance intermediate point and steps c), d) and e) being performed by the target maintenance intermediate point.

Preferably, step a) comprises inserting in the connectivity check packet a target maintenance intermediate point identifier and step d) comprises inserting in the connectivity check response packet an originating maintenance intermediate point identifier.

Preferably, the method further comprises, at each node of the number N of nodes:
- receiving the connectivity check packet at a first maintenance intermediate point of the node from the first unidirectional circular path and reading the first time to live field;
- if the first time to live field is higher than 1, decreasing the first time to live field by 1 and forwarding the packet connectivity check packet along the first unidirectional circular path;
- if the first time to live field is equal to 1, reading the target maintenance intermediate point identifier and:
   - if the target maintenance intermediate point identifier does not match with an identifier of the first maintenance intermediate point, discarding the connectivity check packet; and
   - if the target maintenance intermediate point identifier matches with the identifier of the first maintenance intermediate point, determining that the first maintenance intermediate point is the target maintenance intermediate point.

Preferably, the method further comprises, at each node of the number N of nodes:
- receiving the connectivity check response packet at a second maintenance intermediate point of the node from the second unidirectional circular path and reading the second time to live field;
- if the second time to live field is higher than 1, decreasing the second time to live field by 1 and forwarding the packet connectivity response check packet along the second unidirectional circular path;
- if the second time to live field is equal to 1, reading the originating maintenance intermediate point identifier and:
   - if the originating maintenance intermediate point identifier does not match with an identifier of the second maintenance intermediate point, discarding the connectivity check response packet; and
   - if the originating maintenance intermediate point identifier matches with the identifier of the second maintenance intermediate point, determining that the second maintenance intermediate point is the originating maintenance intermediate point.

Preferably, step a) comprises generating a first number of consecutive connectivity check packets and step d) comprises generating a connectivity check response packet in response to each received connectivity check packet, thereby generating a second number of consecutive connectivity check response packets. Preferably, the method further comprises, at the node:
g) if at least one of the first number of connectivity check packets is received at the node, determining that the first protection path is correctly configured; and
h) if none of the first number of connectivity check packets is received at the node, determining that the first protection path is not correctly configured.

Preferably, the method further comprises, at the node:
i) if at least one of the second number of connectivity check response packets is received at the node, determining that the second protection path is correctly configured; and
j) if none of the second number of connectivity check response packets is received at the node, determining that the second protection path is not correctly configured.

Preferably, the method further comprises, at the node, providing a connectivity check response indicative of an outcome of the connectivity check on the bidirectional circular path.

According to a second aspect, the present invention provides a node for a communication network, the communication network comprising a bidirectional circular path allocated through the node, the bidirectional circular path comprising a first unidirectional circular path and a second counter-rotating unidirectional circular path, the node being provided with topology information relating to the communication network (CN), the node being configured to:
a) generate a connectivity check packet comprising a first time to live field and set the first time to live field based on the topology information;
b) transmit the connectivity check packet from a first side of the node along the first unidirectional circular path;
c) receive the connectivity check packet at a second side of the node opposite to the first side of the node, from the first unidirectional circular path;
d) in response to the connectivity check packet, generate a connectivity check response packet comprising a second time to live field and set the second time to live field based on the topology information in an autonomous way without using any information contained in the connectivity check packet; and
e) transmit the connectivity check response packet from the second opposite side of the node along the second counter-rotating unidirectional circular path.

According to a third aspect, the present invention provides a communication network comprising a number N of nodes arranged according to a ring topology, the communication network comprising a bidirectional circular path allocated through the number N of nodes, at least one of the number N of nodes being as set forth above.

### Brief description of the drawings

The present invention will become clearer by reading the following detailed description, given by way of example and not of limitation, to be read by referring to the accompanying drawings, wherein:
- Figure 1 schematically shows an exemplary ring network where two counter-rotating circular protection paths are allocated;
- Figure 2 shows the operation of the network of Figure 1, in case of a link failure affecting a working LSP;
- Figure 3 shows the network of Figure 1 supporting transmission of OAM packets suitable for checking connectivity of the protection paths;
- Figure 4 schematically shows the structure of a connectivity check packet;
- Figure 5 is a flow chart relating to the processing of the connectivity check packets at the nodes of the network of Figure 1;
- Figure 6 schematically shows the structure of a connectivity check response packet; and
- Figure 7 is a flow chart relating to the processing of the connectivity check response packets at the nodes of the network of Figure 1.

### Detailed description of preferred embodiments of the invention

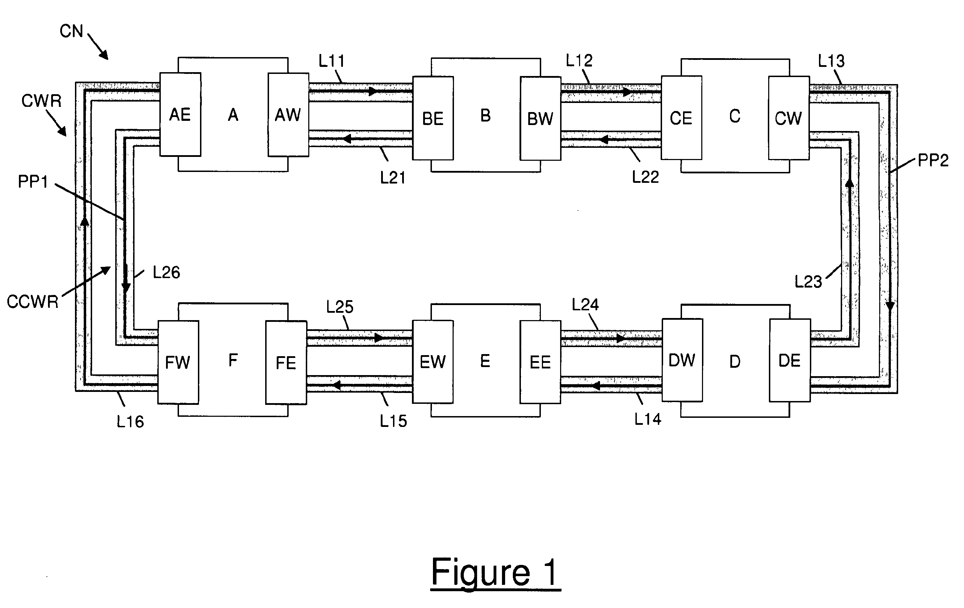

Figure 1 shows a communication network CN suitable for implementing the method according to embodiments of the present invention. The communication network CN preferably is a packet-switched network. More particularly, the communication network CN is an MPLS network or an MPLS-TP network.

The communication network CN comprises a number N of nodes arranged according to a ring topology. In particular, by way of non limiting example, the communication network CN comprises N=6 nodes A, B, C, D, E, F. The communication network CN further comprises a number of physical links (e.g. fiber optics links) connecting the nodes A, B, C, D, E, F according to a ring topology comprising two counter-rotating rings.

In particular, the communication network CN comprises six first unidirectional links L11, L12, L13, L14, L15, L16 which connect the nodes A-B, B-C, C-D, D-E, E-F, F-A forming a clockwise ring CWR. The communication network CN further comprises six second unidirectional links L21, L22, L23, L24, L25, L26 which connect the nodes A-B, B-C, C-D, D-E, E-F, F-A forming a counterclockwise ring CCWR.

Each node A, B, C, D, E, F is preferably provided with topology information relating to the communication network CN. Such topology information preferably comprises the number N of nodes which form the communication network CN. Alternatively, the topology information may comprise a ring map, namely a sequential list of the nodes A, B, C, D, E, F which form the communication network CN. From the ring map, each node A, B, C, D, E, F may directly derive the number N of nodes which form the communication network CN. The network operator may provide the topology information to each node A, B, C, D, E, F upon deployment of the communication network CN. Each node preferably stores the topology information at a respective local database (not shown in the drawings for simplicity).

A number of working paths and protection paths (in particular, working and protection LSPs, in case the communication network CN is either an MPLS network or an MPLS-TP network) are allocated on the clockwise ring CWR and counterclockwise ring CCWR.

According to preferred embodiments of the present invention, a single first protection path PP1 is preferably allocated on the counterclockwise ring CCWR, which provides a shared protection for all the working paths allocated on the clockwise ring CWR. Further, a single second protection path PP2 is preferably allocated on the clockwise ring CWR, which provides a shared protection for all the working paths allocated on the counterclockwise ring CCWR.

More particularly, the first protection path PP1 is a unidirectional circular path which joins all the nodes A, B, C, D, E, F of the communication network CN. Hence, the first protection path PP1 preferably has allocated a protection bandwidth on each one of the unidirectional links L21, L22, L23, L24, L25, L26 forming the counterclockwise ring CCWR. The first protection path PP1 also preferably has associated a first set of protection label values (one for each hop, according to the label swapping technique) allowing all the nodes A, B, C, D, E, F to properly handle packets to be transmitted along the first protection path PP1, as it will be described in detail herein after.

Similarly, also the second protection path PP2 is a unidirectional circular path which joins all the nodes A, B, C, D, E, F of the communication network CN. Hence, the second protection path PP2 preferably has allocated a protection bandwidth on each one of the unidirectional links L11, L12, L13, L14, L15, L16 forming the clockwise ring CWR. The second protection path PP2 also preferably has associated a second set of protection label values (one for each hop, according to the label swapping technique) allowing all the nodes A, B, C, D, E, F to properly handle packets to be transmitted along the second protection path PP2, as it will be described in detail herein after.

The first and second protection paths PP1, PP2 basically form a unique circular bidirectional protection path which provides protection to all the working paths allocated on the clockwise ring CWR and counterclockwise ring CCWR. Accordingly, none of the protection paths PP1, PP2 has a predefined source node or a predefined destination node. In other words, all the nodes A, B, C, D, E, F are intermediate nodes of the protection paths PP1, PP2 when the communication network CN is in normal (e.g. failure-free) conditions.

Preferably, each node A, B, C, D, E, F is provided with at least one maintenance point, in particular at least one maintenance intermediate point (briefly, MIP), associated to the bidirectional protection path formed by the protection paths PP1, PP2.

In particular, each node A, B, C, D, E, F is preferably provided with a respective west-side MIP AW, BW, CW, DW, EW, FW and a respective east-side MIP AE, BE, CE, DE, EE, FE configured to exchange OAM packets for checking connectivity of the bidirectional protection path formed by the protection paths PP1 and PP2, as it will be described in detail herein after.

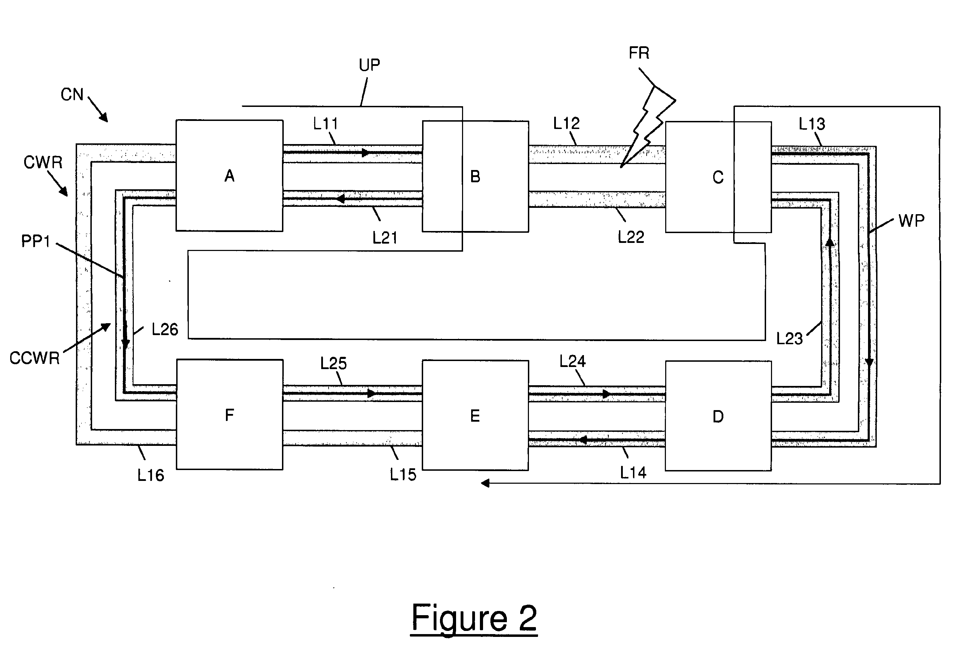

Herein after, the operation of the protection paths PP1, PP2 will be briefly described, with reference to Figure 2. In Figure 2, the MIPs of the various nodes have not been depicted, since MIPs do not take part to the processing of packets carrying user traffic.

It is assumed that, amongst the various working paths allocated in the communication network CN, a working path WP is allocated on the clockwise ring CWR, which originates at the node A (which is accordingly its source node) and terminates at the node E (which is accordingly its destination node). This is not limiting, since working paths may originate and terminate at any node of the communication network CN. Furthermore, the working paths may have source node and the destination node external to the communication network CN. The working path WP preferably has allocated a working bandwidth on the links L11, L12, L13 and L14. The working path WP also preferably has associated one or more label values (preferably, a single label value) allowing nodes A, B, C, D and E to properly handle packets to be transmitted along the working path WP.

In a failure-free scenario, the source node A encapsulates user traffic to be transmitted to the destination node E along the working path WP in user packets UP, which are then carried by the working path WP along the links L11, L12, L13 and L14. The intermediate nodes B, C and D use the label value contained in the label of the received user packets UP for determining the next hop to which the user packets UP shall be forwarded. Besides, the destination node E uses the label value of the received user packets UP for determining that the user packets UP shall be terminated and processed for extracting the original user traffic.

It is now assumed that a failure FR occurs on one of the unidirectional links L11, L12, L13, L14 supporting the working path WP, e.g. the link L12, as shown in Figure 2.

As the node located immediately upstream the failure FR in the direction of the working path WP (namely, the node B) is informed of the failure FR, it preferably identifies, based on the label value of the received user packets, the user packets UP that should be forwarded to the failed link L12 along the working path WP. Then, the node B encapsulates such user packets UP by adding (externally to the label(s) already comprised therein) a protection label comprising the protection label value associated to the first protection path PP1, which runs in the direction opposite to that of the clockwise ring CWR that contains the failed link L12. Then, based on the protection label value, the node B switches the encapsulated user packets UP to the first protection path PP1, namely it forwards the encapsulated user packets UP to the node A along the link L21.

The node A, based exclusively on the protection label value (namely, without processing the innermost label(s) of the user packets UP), forwards the encapsulated user packets UP along the first protection path PP1, namely to the node F along the link L26. The node A may also implement a label swapping technique, e.g. replace the protection label value of the received encapsulated user packets UP with the protection label value associated to the next hop of the first protection path PP1.

The operations of the nodes F, E and D is similar to the operation of the node A, therefore a detailed description will not be repeated. The encapsulated user packets UP then travel along the first protection path PP1, until they reach the node immediately downstream the failure FR in the direction of the working path WP, namely the node C.

The node C preferably processes the protection label and, based on the protection label value, decides to de-encapsulate the encapsulated user packets UP by removing the protection label. Then, the node C processes the innermost label(s) of the de-encapsulated user packets UP and, based on the label value, decides to switch the user packets UP back to the working path WP. The user packets UP will then follow the working path WP up to the node E, as described above.

This way, the first protection path PP1 provides protection to the working path WP according to the above mentioned wrapping protection scheme. Similarly, the second protection path PP2 may provide protection to the working paths allocated on the counterclockwise ring CCWR according to the wrapping protection scheme.

According to embodiments of the present invention, the MIPs of the nodes A, B, C, D, E, F are configured to exchange OAM packets for checking the connectivity of the bidirectional circular protection path formed by the unidirectional protection paths PP1, PP2. This allows guaranteeing that the protection paths PP1, PP2 are correctly configured and properly operate when their intervention is required, e.g. due to a failure affecting one or more working paths.

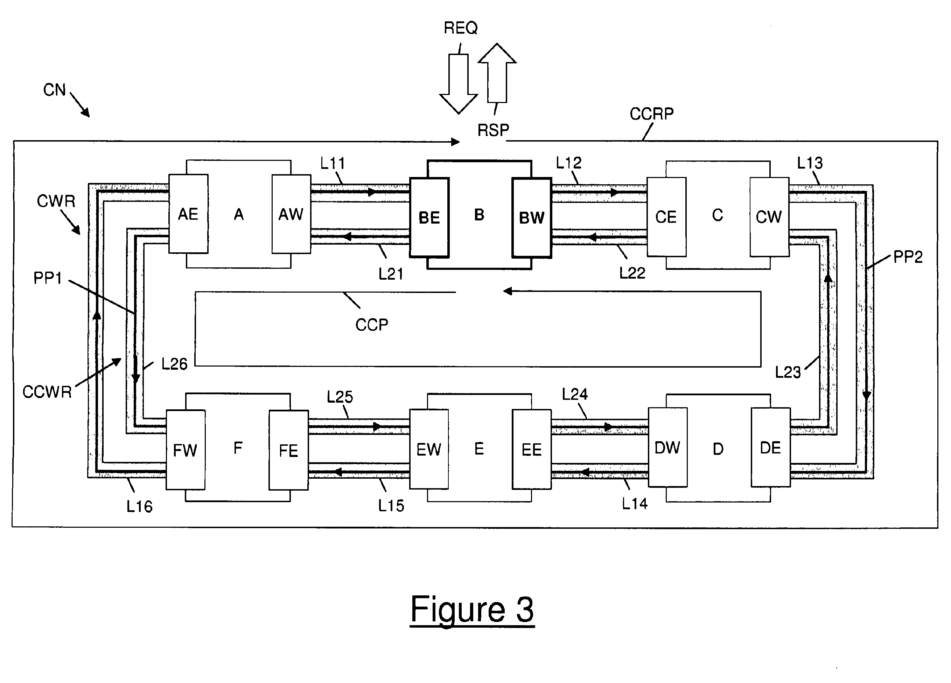

In particular, with reference to Figure 3, since each node A, B, C, D, E, F is an intermediate node of the protection paths PP1, PP2 in normal operating conditions (namely, failure-free conditions), the operator of the communication network CN preferably designates any one of the nodes A, B, C, D, E, F (for instance the node B, depicted in bold lines on Figure 3) as the node responsible of initiating a connectivity check of the protection paths PP1, PP2.

According to embodiments of the present invention, at the node selected by the network operator, one of the two MIPs associated to the bidirectional protection path formed by the unidirectional protection paths PP1, PP2 acts as an originating MIP, i.e. a MIP responsible of:
- spontaneously (namely, not in response to any OAM packet received from a MEP) originating and transmitting to a target MIP connectivity check packets CCP for checking connectivity of the protection paths PP1, PP2; and
- waiting for connectivity check response packets CCRP from a target MIP.

The target MIP preferably is the MIP comprised in the same node as the originating MIP on the opposite side of the node. The target MIP is preferably responsible of:
- receiving connectivity check packets CCP from the originating MIP; and
- transmitting connectivity check response packets CCRP to the originating MIP in response to the received connectivity check packets CCP.

The originating MIP (and accordingly the target MIP) are preferably selected by the network operator. Herein after, by way of non limiting example, it is assumed that, at the selected node B, the originating MIP is the east-side MIP BE and the associated target MIP is the west-side MIP BW.

Then, at any time (provided the communication network CN is in normal operative conditions) the network operator may request an on-demand connectivity check of the protection paths PP1, PP2 by sending a suitable connectivity check request REQ to the node B.

As the node B receives the connectivity check request REQ by the network operator, the originating MIP BE preferably generates at least one connectivity check packet CCP. More preferably, the originating MIP BE generates a number of consecutive connectivity check request packets CCP, for instance three consecutive connectivity check request packets CCP. This allows taking into account possible packet loss occurring along the protection paths PP1, PP2, e.g. due to a congestion.

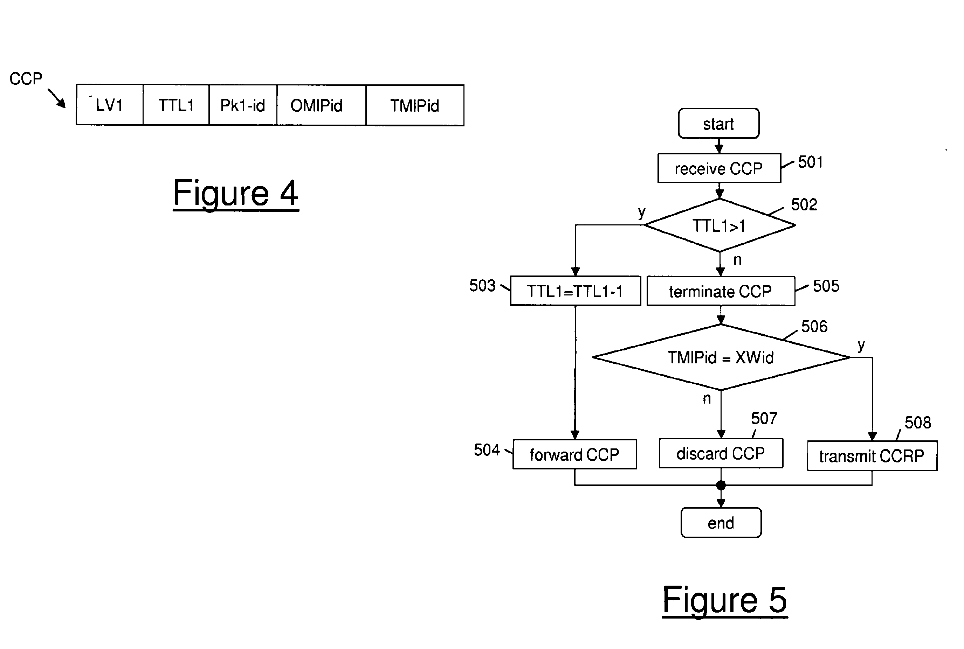

Each connectivity check packet CCP preferably is a CV OAM packet as defined by the above cited IEFT RFC 6371. More preferably, each connectivity check packet CCP is a loopback message LBM as defined by the ITU-T Recommendation G.8113.1 (May 2011), par. 8.2.2 and clause 9.1.2. More particularly, as schematically shown in Figure 4, each connectivity check packet CCP preferably comprises the following fields:
- label value LV1: this field comprises the protection label value associated to the protection path exiting the originating MIP BE (namely, the first protection path PP1), and accordingly allows the nodes A, B, C, D, E, F to forward the connectivity check packet CCP along the first protection path PP1;
- time to live field TTL1: this field comprises the number of hops that the connectivity check packet CCP shall cross before being terminated, namely the number of hops joining the originating MIP and the target MIP. Since the originating MIP and the target MIP reside on a same node, the time to live field TTL1 is set equal to the number N of nodes comprised in the communication network CN (namely, six). This allows the connectivity check packet CCP running along the whole ring and being terminated at the same node by which it was originated, if the first protection path PP1 is correctly configured. The number N is comprised in the topology information provided to all the nodes of the communication network CN upon their deployment. Hence, the originating MIP advantageously uses only the topology information for setting the time to live field TTL1 of each connectivity check packet CCP to the proper value;
- packet identifier Pk1-id: this field comprises a value which uniquely identifies OAM packets (including the connectivity check packets CCP) and which accordingly allows nodes distinguishing such packets from user packets. If the packet CCP is a loopback message LBM, the packet identifier Pk1-id preferably comprises a GAL (Generic Alert Label) having a predefined value and a G-Ach (Generic Associated Channel) header in turn including a Channel Type field (as defined by the IETF RFC 5586) having a predefined value uniquely identifying OAM packets. The packet identifier Pk1-id further preferably comprises an Opcode field of the OAM PDU, having a predefined value which uniquely identifies the specific type of OAM packets, namely connectivity check packets;
- originating MIP identifier OMIPid: this field comprises an identifier of the originating MIP; and
- target MIP identifier TMIPid: this field comprises an identifier of the target MIP.

After generating the at least one connectivity check packet CCP (preferably, three), the originating MIP BE preferably transmits them along the protection path exiting the originating MIP BE, namely the first protection path PP1 on the counterclockwise ring CCWR.

Each node A, F, E, D, C and B of the communication network CN preferably receives the connectivity check packets CCP at its respective west side. The processing of the connectivity check packets CCP at each node A, F, E, D, C and B is now described in detail with reference to the flow chart of Figure 5.

Preferably, as the node X (X = A, F, E, D, C, B) receives a connectivity check packet CCP at its west side (step 501), it preferably reads the value of the time to live field TTL1 comprised therein (step 502).

If such value is higher than 1, the node X preferably decreases the value of the time to live field TTL1 by one (step 503). Then, the node X preferably forwards the packet CCP to the next hop of the first protection path PP1, based on the label value LV1 of the received packet CCP (step 504). During step 504, the node X may also perform label swapping by replacing the current label value LV1 of the received packet CCP with a new label value LV1 associated to the next hop of the first protection path PP1.

If the value of the field TTL1 is equal to 1, the node X terminates the packet CCP (step 505) and, based on its packet identifier Pk1-id, determines it is an OAM packet and, accordingly, forwards it to its west-side MIP XW. In other words, the termination of the connectivity check packets CCP is triggered by the expiration of the time to live field TTL1 comprised in the packets CCP. The MIP XW then preferably reads the target MIP identifier TMIPid comprised in the packet CCP and compares it with its own identifier XWid (step 506).

If the two identifies do not match, the MIP XW realizes that it is not the target MIP and that accordingly the connectivity check packet CCP has not reached the target MIP with the expected number of hops. Hence, the MIP XW preferably discards the packet CCP (step 507).

On the other hand, if the target MIP identifier TMIPid comprised in the received connectivity check packet CCP matches with the identifier XWid of the MIP XW, the MIP XW realizes that it is the target MIP and that accordingly the connectivity check packet CCP has actually reached the target MIP with the expected number of hops. Hence, the MIP XW preferably generates a connectivity check response packet CCRP and transmits it along the second protection path PP2 on the clockwise ring CWR (step 508), as it will be described in detail herein after.

Hence, with reference to Figure 3, when the first protection path PP1 is correctly provisioned, the connectivity check packets CCP generated by the originating MIP BE are transmitted along the whole first protection path PP1 through the nodes A, F, E, D, C until they reach again the node B (provided they are not discarded by any one of the nodes A, F, E, D, C e.g. due to a congestion).

Each node A, F, E, D, C reads the time to live field TTL1 of the received packets CCP (step 502), determines that its value is higher than 1 and accordingly decreases such value by one (step 503) and forwards the packets CCP to the next hop of the first protection path PP1. Hence, at each hop, the value of the time to live field TTL1 is decreased by 1 and becomes equal to 1 when the packets CCP reach the node B comprising the originating MIP BE and the target MIP BW.

Besides, the node B reads the time to live field TTL1 of the received packets CCP (step 502), determines that its value is equal to 1 and accordingly terminates the packets CCP (step 505). Then, the target MIP BW reads the target MIP identifier TMIPid comprised in the received packets CCP (step 506) and determines that it matches its own identifier BWid. As a consequence, the target MIP BW generates connectivity check response packets CCRP (one for each connectivity check packet CCP whose identifier TMIPid matches its own identifier BWid) and transmits them along the second protection path PP2 on the clockwise ring CWR (step 508).

If, due to a configuration error of the first protection path PP1, one or more packets CCP transmitted by the originating MIP BE are terminated at a node other than the node B due to expiration of their time to live field TTL1 (for instance, the node D instead of the node B), such node discards this packet CCP (step 507), which accordingly does not reach the target MIP BW.

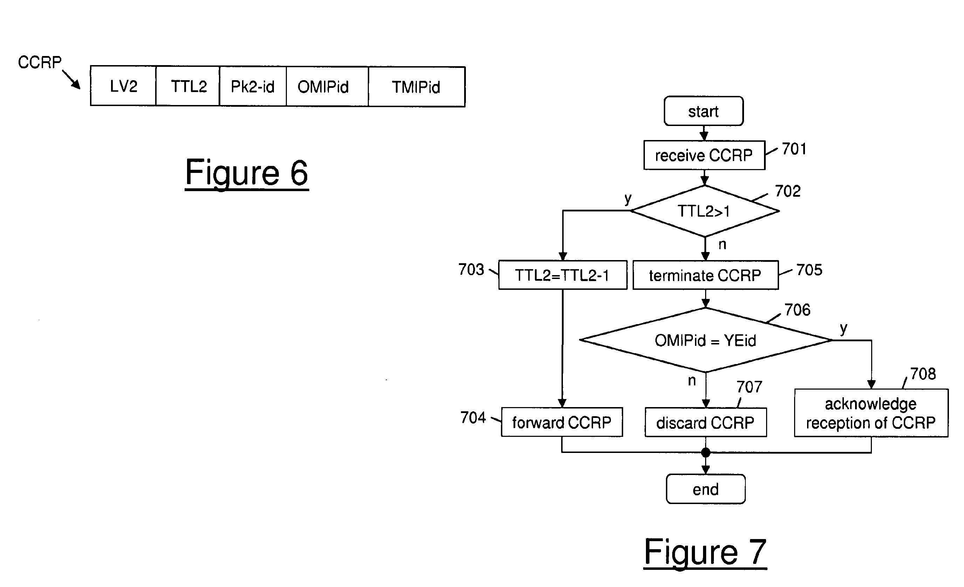

Each connectivity check response packet CCRP preferably is a CV reply OAM packet as defined by the above cited IEFT RFC 6371. More preferably, each connectivity check response packet CCRP is a loopback reply LBR as defined by the ITU-T Recommendation G.8113.1 (May 2011), par. 8.2.2 and clause 9.1.2. More particularly, as schematically shown in Figure 6, each connectivity check response packet CCRP preferably comprises the following fields:
- label value LV2: this field comprises the protection label value associated to the protection path exiting the target MIP BW (namely, the second protection path PP2), and accordingly allows the nodes A, B, C, D, E, F to forward the connectivity check response packet CCRP along the second protection path PP2;
- time to live field TTL2: this field comprises the number of hops that the connectivity check response packet CCRP shall cross before being terminated, namely the number of hops joining the target MIP and the originating MIP. Since the originating MIP and the target MIP reside on a same node, similarly, to the time to live filed TTL1, also the time to live field TTL2 is set equal to the number N of nodes comprised in the communication network CN (namely, six). This allows the connectivity check response packet CCRP running along the whole ring and being terminated at the same node by which it was originated, if the second protection path PP2 is correctly configured. As mentioned above, the number N is comprised in the topology information provided to all the nodes of the communication network CN upon their deployment. Hence, the target MIP advantageously uses only the topology information for setting the time to live field TTL2 of each connectivity check response packet CCRP to the proper value, without the need to receive any additional information from the originating MIP;
- packet identifier Pk2-id: this field comprises the above mentioned value which uniquely identifies OAM packets (including the connectivity check response packets CCRP) and which accordingly allows nodes distinguishing such packets from user packets. If the packet CCRP is a loopback reply LBR, the packet identifier Pk2-id preferably comprises a GAL (Generic Alert Label) having a predefined value and a G-Ach (Generic Associated Channel) header in turn including a Channel Type field (as defined by the IETF RFC 5586) having a predefined value uniquely identifying OAM packets. The packet identifier Pk2-id further preferably comprises an Opcode field of the OAM PDU, having a predefined value which uniquely identifies the specific type of OAM packets, namely connectivity check response packets;
- originating MIP identifier OMIPid: this field comprises an identifier of the originating MIP; and
- target MIP identifier TMIPid: this field comprises an identifier of the target MIP.

After generating a connectivity check response packet CCRP in response to each received packet CCP whose target MIP identifier TMIPid matches its own identifier BWid, the target MIP BW preferably transmits it along the protection path exiting the target MIP BW, namely the second protection path PP2 on the clockwise ring CWR.

Each node C, D, E, F, A, B of the communication network CN preferably receives the connectivity check response packets CCRP at its respective east side. The processing of the connectivity check response packets CCRP at each node C, D, E, F, A, B is now described in detail with reference to the flow chart of Figure 7.

Preferably, as the node Y (Y = C, D, E, F, A, B) receives a connectivity check response packet CCRP at its east side (step 701), it preferably reads the value of the time to live field TTL2 comprised therein (step 702).

If such value is higher than 1, the node Y preferably decreases the value of the time to live field TTL2 by one (step 703). Then, the node Y preferably forwards the packet CCRP to the next hop of the second protection path PP2, based on the label value LV2 of the received packet CCRP (step 704). During step 704, the node Y may also perform label swapping by replacing the current label value LV2 of the received packet CCRP with a new label value LV2 associated to the next hop of the second protection path PP2.

If the value of the field TTL2 is equal to 1, the node Y terminates the packet CCRP (step 705) and, based on its packet identifier Pk2-id, determines it is an OAM packet and, accordingly, forwards it to its east-side MIP YE. In other words, similarly to the connectivity check packet CCP, also the termination of the connectivity check response packets CCRP is triggered by the expiration of the time to live field TTL2 comprised in the packets CCRP. This is different from what prescribed by the above mentioned IETF RFC 6371, according to which the CV reply OAM packets are terminated only when they are received at the node comprising the originating MEP. The MIP YE then preferably reads the originating MIP identifier OMIPid comprised in the packet CCRP and compares it with its own identifier YEid (step 706).

If the two identifies do not match, the MIP YE realizes that it is not the originating MIP and that accordingly the connectivity check response packet CCRP has not reached the originating MIP with the expected number of hops. Hence, the MIP YE preferably discards the packet CCRP (step 707).

On the other hand, if the originating MIP identifier OMIPid comprised in the received connectivity check response packet CCRP matches with the identifier YEid of the MIP YE, the MIP YE realizes that it is the originating MIP and accordingly acknowledges that the connectivity check response packet CCRP has actually reached the originating MIP with the expected number of hops (step 708).

Hence, with reference again to Figure 3, when the second protection path PP2 is correctly provisioned, the connectivity check response packets CCRP generated by the target MIP BW are transmitted along the whole second protection path PP2 through the nodes C, D, E, F, A until they reach again the node B (provided they are not discarded by any one of the nodes C, D, E, F, A e.g. due to a congestion).

Each node C, D, E, F, A reads the time to live field TTL2 of the received packets CCRP (step 702), determines that its value is higher than 1 and accordingly decreases such value by one (step 703) and forwards the packets CCRP to the next hop of the second protection path PP2. Hence, at each hop, the value of the time to live field TTL2 is decreased by 1 and becomes equal to 1 when the packets CCRP reach the node B comprising the originating MIP BE and the target MIP BW.

Besides, the node B reads the time to live field TTL2 of the received packets CCRP (step 702), determines that its value is equal to 1 and accordingly terminates the packets CCRP (step 705). Then, the originating MIP BE reads the originating MIP identifier OMIPid comprised in the received packets CCRP (step 706) and determines that it matches its own identifier BEid.

If, due to a configuration error of the second protection path PP2, one or more packets CCRP transmitted by the target MIP BW are terminated at a node other than the node B due to expiration of their time to live field TTL2 (for instance, the node F instead of the node B), such node discards this packet CCRP (step 707), which accordingly does not reach the originating MIP BE.

Hence, the node B elected by the network operator, by transmitting and receiving the connectivity check packets CCP and the connectivity check response packets CCRP along the circular protection paths PP1 and PP2, may advantageously gather information on the connectivity of such protection paths.

In particular, if the node B determines that at least one of the connectivity check packets CCP transmitted by the originating MIP BE is received at the target MIP BW, it may conclude that the first protection path PP1 is correctly configured, although one or more of the transmitted connectivity check packets CCP have been lost, e.g. due to a congestion. On the other hand, if the node B determines that none of the connectivity check packets CCP transmitted by the originating MIP BE is received at the target MIP BW, it may conclude that the first protection path PP1 is not correctly configured.

Besides, if the node B determines that at least one of the connectivity check response packets CCRP transmitted by the target MIP BW are received at the originating MIP BE, it may conclude that the second protection path PP2 is correctly configured, although one or more of the transmitted connectivity check response packets CCRP have been lost, e.g. due to a congestion. On the other hand, if the node B determines that none of the connectivity check response packets CCRP transmitted by the target MIP BW is received at the originating MIP BE, it may conclude that the second protection path PP2 is not correctly configured.

The node B then preferably reports a connectivity check response RSP to the network operator for informing him/her of the outcome of the connectivity check on the bidirectional protection path formed by the protection paths PP1, PP2.

This way, the network operator, through the node B, may verify that the bidirectional protection path formed by the protection paths PP1, PP2 was correctly provisioned in the communication network CN. Hence, in case of a failure affecting any of the working paths allocated in the communication network CN, the protection paths PP1, PP2 may be conveniently used for supporting the above described wrapping protection scheme.

Hence, according to the above described method, the connectivity of the protection paths PP1, PP2 may be advantageously checked even if these protection paths do not comprise any predefined source or destination node provided with a MEP which may initiate an exchange of OAM packets. Indeed, according to the method as described above, any MIP may be designated by the network operator as an originating MIP capable of spontaneously (namely, not in response to any OAM packet received from a MEP) generate and transmit packets CCP suitable to trigger a bidirectional connectivity check of the paths PP1, PP2.

Furthermore, the above described method may be advantageously implemented by any known protocol currently supporting communication between originating MEPs and target MEPs or MIPs, without requiring any modification. For instance, the above described method may be advantageously implemented by the above mentioned Loopback LBM/LBR protocol, without requiring any modification of such known protocol.

Indeed, as discussed above, since originating MIP and target MIP reside on the same node, for guaranteeing that connectivity check packets CCP and connectivity check response packets CCRP reach the target MIP and the originating MIP, respectively, the originating MIP and the target MIP shall set their time to live fields equal to the number N of nodes comprised in the communication network. The number N of nodes comprised in the communication network CN is however a topology information, which is provided to all the nodes of the communication network CN (in particular to the node comprising originating MIP and target MIP) upon their configuration.

Therefore, even if the exchange of packets CCP and CCRP is initiated by an originating MIP (and not by an originating MEP), the target MIP is advantageously capable of targeting the originating MIP by properly setting in an autonomous way the time to live field of the response packets CCRP, since it may derive such value from topology information that it already owns. In other words, the target MIP does not need to receive any information from the originating MIP which enables it to properly set the time to live field of the response packets CCRP.

The originating MIP therefore does not need to add to the connectivity check packets CCP (e.g. loopback messages LBM) any additional information allowing the target MIP to properly set the time to live field of the response packets CCRP. In other words, the originating MIP may transmit to the target MIP connectivity check packets compliant with the relevant standard (e.g. standard loopback messages LBM). Hence, the above method may be advantageously implemented in any communication network whose MIPs support any known OAM protocol, without requiring any modification to the nodes' configuration. The time and cost for deploying the above method in a communication network is therefore advantageously very reduced.

## Claims

1. A method for checking connectivity of a bidirectional circular path (PP1, PP2) provided in a communication network (CN) comprising a number N of nodes (A, B, C, D, E, F) connected according to a ring topology, said bidirectional circular path (PP1, PP2) comprising a first unidirectional circular path (PP1) and a second counter-rotating unidirectional circular path (PP2), at least one node (B) of said number N of nodes (A, B, C, D, E, F) being provided with topology information relating to said communication network (CN), said method comprising, at said node (B):
a) generating a connectivity check packet (CCP) comprising a first time to live field (TTL1) and setting said first time to live field (TTL1) based on said topology information;
b) transmitting said connectivity check packet (CCP) from a first side of said node (B) along said first unidirectional circular path (PP1);
c) receiving said connectivity check packet (CCP) at a second side of said node (B) opposite to said first side of said node (B), from said first unidirectional circular path (PP1);
d) in response to said connectivity check packet (CCP), generating a connectivity check response packet (CCRP) comprising a second time to live field (TTL2) and setting said second time to live field (TTL2) based on said topology information in an autonomous way without using any information contained in said connectivity check packet (CCP); and
e) transmitting said connectivity check response packet (CCRP) from said second opposite side of said node (B) along said second counter-rotating unidirectional circular path (PP2).

2. The method according to claim 1, wherein said topology information comprise said number N.

3. The method according to claim 1, wherein said topology information comprise a sequential list of said number N of nodes (A, B, C, D, E, F).

4. The method according to any of the preceding claims, wherein it further comprises providing said topology information to said at least one node (B) upon deployment of said communication network (CN).

5. The method according to any of the preceding claims, wherein said step a) comprises setting said first time to live field (TTL1) equal to said number N and wherein said step d) comprises setting said second time to live field (TTL2) equal to said number N.

6. The method according to any of the preceding claims, wherein said node (B) comprises an originating maintenance intermediate point (BE) located at said first side of said node (B) and a target maintenance intermediate point (BW) located at said second opposite side of said node (B), said steps a) and b) being performed by said originating maintenance intermediate point (BE) and said steps c), d) and e) being performed by said target maintenance intermediate point (BW).

7. The method according to claim 6, wherein said step a) comprises inserting in said connectivity check packet (CCP) a target maintenance intermediate point identifier (TMIPid) and wherein said step d) comprises inserting in said connectivity check response packet (CCRP) an originating maintenance intermediate point identifier (OMIPid).

8. The method according to claim 7, wherein said method further comprises, at each node (X) of said number N of nodes (A, B, C, D, E, F):
- receiving said connectivity check packet (CCP) at a first maintenance intermediate point (XW) of said each node (X) from said first unidirectional circular path (PP1) and reading said first time to live field (TTL1);
- if said first time to live field (TTL1) is higher than 1, decreasing said first time to live field (TTL1) by 1 and forwarding said packet connectivity check packet (CCP) along said first unidirectional circular path (PP1);
- if said first time to live field (TTL1) is equal to 1, reading said target maintenance intermediate point identifier (TMIPid) and:
- if said target maintenance intermediate point identifier (TMIPid) does not match with an identifier (XWid) of said first maintenance intermediate point (XW), discarding said connectivity check packet (CCP); and
- if said target maintenance intermediate point identifier (TMIPid) matches with said identifier (XWid) of said first maintenance intermediate point (XW), determining that said first maintenance intermediate point (XW) is said target maintenance intermediate point (BW).

9. The method according to claim 7 or 8, wherein said method further comprises, at each node (Y) of said number N of nodes (A, B, C, D, E, F):
- receiving said connectivity check response packet (CCRP) at a second maintenance intermediate point (YE) of said each node (Y) from said second unidirectional circular path (PP2) and reading said second time to live field (TTL2);
- if said second time to live field (TTL2) is higher than 1, decreasing said second time to live field (TTL2) by 1 and forwarding said packet connectivity response check packet (CCRP) along said second unidirectional circular path (PP2);
- if said second time to live field (TTL2) is equal to 1, reading said originating maintenance intermediate point identifier (OMIPid) and:
- if said originating maintenance intermediate point identifier (OMIPid) does not match with an identifier (YEid) of said second maintenance intermediate point (YE), discarding said connectivity check response packet (CCRP); and
- if said originating maintenance intermediate point identifier (OMIPid) matches with said identifier (YEid) of said second maintenance intermediate point (YE), determining that said second maintenance intermediate point (YE) is said originating maintenance intermediate point (BE).

10. The method according to any of the preceding claims, wherein said step a) comprises generating a first number of consecutive connectivity check packets (CCP) and said step d) comprises generating a connectivity check response packet (CCRP) in response to each received connectivity check packet (CCP), thereby generating a second number of consecutive connectivity check response packets (CCRP).

11. The method according to claim 10, wherein it further comprises, at said node (B):
g) if at least one of said first number of connectivity check packets (CCP) is received at said node (B), determining that said first protection path (PP1) is correctly configured; and
h) if none of said first number of connectivity check packets (CCP) is received at said node (B), determining that said first protection path (PP1) is not correctly configured.

12. The method according to claim 10 or 11, wherein it further comprises, at said node (B):
i) if at least one of said second number of connectivity check response packets (CCRP) is received at said node (B), determining that said second protection path (PP2) is correctly configured; and
j) if none of said second number of connectivity check response packets (CCRP) is received at said node (B), determining that said second protection path (PP2) is not correctly configured.

13. The method according to claim 11 or 12, wherein it further comprises, at said node (B), providing a connectivity check response (RSP) indicative of an outcome of the connectivity check on said bidirectional circular path (PP1, PP2).

14. A node (B) for a communication network (CN), said communication network (CN) comprising a bidirectional circular path (PP1, PP2) allocated through said node (B), said bidirectional circular path (PP1, PP2) comprising a first unidirectional circular path (PP1) and a second counter-rotating unidirectional circular path (PP2), said node (B) being provided with topology information relating to said communication network (CN), said node (B) being configured to:
a) generate a connectivity check packet (CCP) comprising a first time to live field (TTL1) and set said first time to live field (TTL1) based on said topology information;
b) transmit said connectivity check packet (CCP) from a first side of said node (B) along said first unidirectional circular path (PP1);
c) receive said connectivity check packet (CCP) at a second side of said node (B) opposite to said first side of said node (B), from said first unidirectional circular path (PP1);
d) in response to said connectivity check packet (CCP), generate a connectivity check response packet (CCRP) comprising a second time to live field (TTL2) and set said second time to live field (TTL2) based on said topology information in an autonomous way without using any information contained in said connectivity check packet (CCP); and
e) transmit said connectivity check response packet (CCRP) from said second opposite side of said node (B) along said second counter-rotating unidirectional circular path (PP2).

15. A communication network (CN) comprising a number N of nodes (A, B, C, D, E, F) arranged according to a ring topology, said communication network (CN) comprising a bidirectional circular path (PP1, PP2) allocated through said number N of nodes (A, B, C, D, E, F), at least one (B) of said number N of nodes (A, B, C, D, E, F) being according to claim 14.

## Patentansprüche

1. Verfahren für das Prüfen der Konnektivität eines bidirektionalen ringförmigen Pfads (PP1, PP2), der in einem Kommunikationsnetzwerk (CN) bereitgestellt wird, das eine Anzahl N von Knoten (A, B, C, D, E, F) umfasst, die entsprechend einer Ringtopologie verknüpft sind, wobei besagter bidirektionaler ringförmiger Pfad (PP1, PP2) einen ersten eindirektionalen ringförmigen Pfad (PP1) und einen zweiten entgegengerichteten eindirektionalen ringförmigen Pfad (PP2) umfasst, wobei mindestens ein Knoten (B) aus besagter Anzahl N von Knoten (A, B, C, D, E, F) mit Topologieinformationen zu besagtem Kommunikationsnetzwerk (CN) ausgestattet ist, wobei besagtes Verfahren an besagtem Knoten (B) umfasst:
a) Generieren eines Konnektivitätsprüfungspakets (CCP), das ein erstes Time-to-Live-Feld (TTL1) umfasst und besagtes erstes Time-to-Live-Feld (TTL1) auf der Grundlage besagter Topologieinformationen einrichtet;
b) Übermitteln besagten Konnektivitätsprüfungspakets (CCP) von einer ersten Seite besagten Knotens (B) auf dem besagten ersten eindirektionalen ringförmigen Pfad (PP1);
c) Empfangen besagten Konnektivitätsprüfungspakets (CCP) auf einer zweiten Seite besagten Knotens (B) die der besagten ersten Seite besagten Knotens (B) gegenüberliegt, über besagten ersten eindirektionalen ringförmigen Pfad (PP1);
d) in Reaktion auf besagtes Konnektivitätsprüfungspaket (CCP) das Generieren eines Konnektivitätsprüfungs-Antwortpakets (CCRP), das ein zweites Time-to-Live-Feld (TTL2) umfasst, und das Festlegen besagten zweiten Time-to-Live-Felds (TTL2) auf der Grundlage besagter Topologieinformationen, auf autonome Art und ohne Verwendung jeglicher Informationen, die in besagtem Konnektivitätsprüfungspaket (CCP) enthalten sind; und
e) Übermitteln besagten Konnektivitätsprüfungs-Antwortpakets (CCRP) von besagter zweiter, gegenüberliegender Seite besagten Knotens (B) auf dem besagten zweiten entgegengerichteten eindirektionalen ringförmigen Pfad (PP2).

2. Das Verfahren nach Anspruch 1, wobei besagte Topologieinformationen besagte Anzahl N umfassen.

3. Das Verfahren nach Anspruch 1, wobei besagte Topologieinformationen eine sequentielle Liste besagter Anzahl N von Knoten (A, B, C, D, E, F) umfassen.

4. Das Verfahren nach jeglichem der vorangehenden Ansprüche, wobei es weiterhin das Zurverfügungstellen besagter Topologieinformationen für besagten mindestens einen Knoten (B) auf den Einsatz besagten Kommunikationsnetzwerks (CN) hin umfasst.

5. Das Verfahren nach jeglichem der vorangehenden Ansprüche, wobei besagter Schritt a) das Festlegen besagten ersten Time-to-Live-Felds (TTL1) auf den gleichen Wert wie besagte Anzahl N umfasst und wobei besagter Schritt d) das Festlegen besagten zweiten Time-to-Live-Felds (TTL2) auf den gleichen Wert wie besagte Anzahl N umfasst.

6. Das Verfahren nach jeglichem der vorangehenden Ansprüche, wobei besagter Knoten (B) einen Ursprungs-Wartungszwischenpunkt (BE) auf besagter erster Seite besagten Knotens (B) und einen Ziel-Wartungszwischenpunkt (BW) auf besagter zweiter, gegenüberliegender Seite besagten Knotens (B) umfasst, wobei besagte Schritte a) und b) ausgeführt werden von besagtem Ursprungs-Wartungszwischenpunkt (BE) und besagte Schritte c), d) und e) von besagtem Ziel-Wartungszwischenpunkt (BW).

7. Das Verfahren nach Anspruch 6, wobei besagter Schritt a) das Einfügen einer Zielwartungszwischenpunkt-Kennung (TMIPid) in das Konnektivitätsprüfungspaket (CCP) umfasst und wobei besagter Schritt d) das Einfügen einer Ursprungswartungszwischenpunkts-Kennung (OMIPid) in besagtes Konnektivitätsprüfungs-Antwortpaket (CCRP) umfasst.

8. Das Verfahren nach Anspruch 7, wobei besagtes Verfahren an jedem Knoten (X) besagter Anzahl N von Knoten (A, B, C, D, E, F) weiterhin umfasst:
- das Empfangen besagten Konnektivitätsprüfungspakets (CCP) an einem ersten Wartungszwischenpunkt (XW) besagten jeden Knotens (X) auf besagtem ersten eindirektionalen ringförmigen Pfad (PP1) und das Auslesen besagten ersten Time-to-Live-Felds (TTL1);
- wenn der Wert im besagten ersten Time-to-Live-Feld (TTL1) größer als 1 ist, das Heruntersetzen besagten ersten Time-to-Live-Felds (TTL1) um 1 und das Weiterleiten besagten Konnektivitätsprüfungspakets (CCP) auf dem besagten ersten eindirektionalen ringförmigen Pfad (PP1);
- wenn der Wert im besagten ersten Time-to-Live-Feld (TTL1) gleich 1 ist, das Lesen besagter Zielwartungszwischenpunkt-Kennung (TMIPid) und:
- wenn besagte Zielwartungszwischenpunkt-Kennung (TMIPid) nicht mit einer Kennung (XWid) besagten ersten Wartungszwischenpunkts (XW) übereinstimmt, das Entfernen besagten Konnektivitätsprüfungspakets (CCP); und
- wenn besagte Zielwartungszwischenpunkt-Kennung (TMIPid) mit besagter Kennung (XWid) besagten ersten Wartungszwischenpunkts (XW) übereinstimmt, bestimmen, dass besagter erster Wartungszwischenpunkt (XW) besagter Ziel-Wartungszwischenpunkt (BW) ist.

9. Das Verfahren nach Anspruch 7 oder 8, wobei besagtes Verfahren an jedem Knoten (Y) besagter Anzahl N von Knoten (A, B, C, D, E, F) weiterhin umfasst:
- das Empfangen besagten Konnektivitätsprüfungs-Antwortpakets (CCRP) an einem zweiten Wartungszwischenpunkt (YE) besagten jeden Knotens (Z) auf besagtem zweiten eindirektionalen ringförmigen Pfad (PP2) und das Auslesen besagten zweiten Time-to-Live-Felds (TTL2);
- wenn der Wert im besagten zweiten Time-to-Live-Feld (TTL2) größer als 1 ist, das Heruntersetzen besagten zweiten Time-to-Live-Felds (TTL2) um 1 und das Weiterleiten besagten Konnektivitätsprüfungs-Antwortpakets (CCRP) auf dem besagten zweiten eindirektionalen ringförmigen Pfad (PP2);
- wenn der Wert im besagten zweiten Time-to-Live-Feld (TTL2) gleich 1 ist, das Lesen besagter Ursprungswartungszwischenpunkts-Kennung (OMIPid) und:
- wenn besagte Ursprungswartungszwischenpunkts-Kennung (OMIPid) nicht mit einer Kennung (YEid) besagten zweiten Wartungszwischenpunkts (YE) übereinstimmt, das Entfernen besagten Konnektivitätsprüfungs-Antwortpakets (CCRP); und
- wenn besagte Ursprungswartungszwischenpunkts-Kennung (OMIPid) mit besagter Kennung (YEid) besagten zweiten Wartungszwischenpunkts (YE) übereinstimmt, bestimmen, dass besagter zweiter Wartungszwischenpunkt (YE) besagter Ursprungs-Wartungszwischenpunkt (BE) ist.

10. Das Verfahren nach jeglichem der vorangehenden Ansprüche, wobei besagter Schritt a) das Generieren einer ersten Anzahl aufeinanderfolgender Konnektivitätsprüfungspakete (CCP) umfasst und besagter Schritt d) das Generieren eines Konnektivitätsprüfungs-Antwortpakets (CCRP) in Reaktion auf jedes empfangene Konnektivitätsprüfungspaket (CCP) umfasst, dabei eine zweite Anzahl aufeinanderfolgender Konnektivitätsprüfungs-Antwortpakete (CCRP) generierend.

11. Das Verfahren nach Anspruch 10, wobei es an dem besagten Knoten (B) weiterhin umfasst:
g) wenn mindestens eines aus besagter erster Anzahl von Konnektivitätsprüfungspaketen (CCP) an besagtem Knoten (B) empfangen wird, das Feststellen, dass besagter erster Schutzpfad (PP1) korrekt konfiguriert ist; und
h) wenn keines aus besagter erster Anzahl von Konnektivitätsprüfungspaketen (CCP) an besagtem Knoten (B) empfangen wird, das Feststellen, dass besagter erster Schutzpfad (PP1) nicht korrekt konfiguriert ist; und

12. Das Verfahren nach Anspruch 10 oder 11, wobei es an dem besagten Knoten (B) weiterhin umfasst:
i) wenn mindestens eines aus besagter zweiter Anzahl von Konnektivitätsprüfungs-Antwortpaketen (CCRP) an besagtem Knoten (B) empfangen wird, das Feststellen, dass besagter zweiter Schutzpfad (PP2) korrekt konfiguriert ist; und
j) wenn keines aus besagter zweiter Anzahl von Konnektivitätsprüfungs-Antwortpaketen (CCRP) an besagtem Knoten (B) empfangen wird, das Feststellen, dass besagter zweiter Schutzpfad (PP2) nicht korrekt konfiguriert ist.

13. Das Verfahren nach Anspruch 11 oder 12, wobei das Verfahren an besagtem Knoten (B) weiterhin das Zurverfügungstellen einer Konnektivitätsprüfungs-Antwort (RSP) umfasst, die ein Ergebnis der Konnektivitätsprüfung auf besagtem bidirektionalem ringförmigen Pfad (PP1, PP2) anzeigt.

14. Ein Knoten (B) für ein Kommunikationsnetzwerk (CN), wobei besagtes Kommunikationsnetzwerk (CN) einen bidirektionalen ringförmigen Pfad (PP1, PP2) umfasst, der zugeteilt ist über besagten Knoten (B), wobei besagter bidirektionaler ringförmiger Pfad (PP1, PP2) einen ersten eindirektionalen ringförmigen Pfad (PP1) und einen zweiten entgegengerichteten eindirektionalen ringförmigen Pfad (PP2) umfasst, wobei besagter Knoten (B) mit Topologieinformationen zu besagtem Kommunikationsnetzwerk (CN) ausgestattet ist und besagter Knoten (B) konfiguriert ist für:
a) das Generieren eines Konnektivitätsprüfungspakets (CCP), das ein erstes Time-to-Live-Feld (TTL1) umfasst, und für das Einrichten besagten ersten Time-to-Live-Felds (TTL1) auf der Grundlage besagter Topologieinformationen;
b) das Übermitteln besagten Konnektivitätsprüfungspakets (CCP) von einer ersten Seite besagten Knotens (B) auf dem besagten ersten eindirektionalen ringförmigen Pfad (PP1);
c) das Empfangen besagten Konnektivitätsprüfungspakets (CCP) auf einer zweiten Seite besagten Knotens (B) die der besagten ersten Seite besagten Knotens (B) gegenüberliegt, über besagten ersten eindirektionalen ringförmigen Pfad (PP1);
d) in Reaktion auf besagtes Konnektivitätsprüfungspaket (CCP) für das Generieren eines Konnektivitätsprüfungs-Antwortpakets (Connectivity Check Response Packet, CCRP), das ein zweites Time-to-Live-Feld (TTL2) umfasst, und für das Festlegen besagten zweiten Time-to-Live-Felds (TTL2) auf der Grundlage besagter Topologieinformationen, auf autonome Art und ohne Verwendung jeglicher Informationen, die in besagtem Konnektivitätsprüfungspaket (CCP) enthalten sind; und
e) das Übermitteln besagten Konnektivitätsprüfungs-Antwortpakets (CCRP) von besagter zweiter, gegenüberliegender Seite besagten Knotens (B) auf dem besagten zweiten entgegengerichteten eindirektionalen ringförmigen Pfad (PP2).

15. Ein Kommunikationsnetzwerk (CN), eine Anzahl N von Knoten (A, B, C, D, E, F) umfassend, angeordnet in einer Ringtopologie, wobei besagtes Kommunikationsnetzwerk (CN) einen bidirektionalen ringförmigen Pfad (PP1, PP2) umfasst, zugeteilt über besagte Anzahl N von Knoten (A, B, C, D, E, F), wobei mindestens ein Knoten (B) aus besagter Vielzahl von Knoten (A, B, C, D, E, F) den Anforderungen aus Anspruch 14 entspricht.

## Revendications

1. Procédé de vérification de la connectivité d'un chemin circulaire bidirectionnel (PP1, PP2) dans un réseau de communication (CN) comprenant un nombre N de noeuds (A, B, C, D, E, F) connectés selon une topologie en anneau, ledit chemin circulaire bidirectionnel (PP1, PP2) comprenant un premier chemin circulaire unidirectionnel (PP1) et un second chemin circulaire unidirectionnel en sens inverse (PP2), au moins un noeud (B) dudit nombre N de noeuds (A, B, C, D, E, F) étant doté d'informations de topologie relatives audit réseau de communication (CN), ledit procédé comprenant, sur ledit noeud (B), les étapes suivantes :
a) générer un paquet de vérification de connectivité (CCP) comprenant un premier champ de durée de vie (TTL1) et définir ledit premier champ de durée de vie (TTL1) sur la base desdites informations de topologie ;
b) transmettre ledit paquet de vérification de connectivité (CCP) depuis un premier côté dudit noeud (B) le long dudit premier chemin circulaire unidirectionnel (PP1) ;
c) recevoir ledit paquet de vérification de connectivité (CCP) sur un second côté dudit noeud (B) opposé audit premier côté dudit noeud (B), depuis ledit premier chemin circulaire unidirectionnel (PP1) ;
d) en réponse audit paquet de vérification de connectivité (CCP), générer un paquet de réponse de vérification de connectivité (CCRP) comprenant un second champ de durée de vie (TTL2) et définir ledit second champ de durée de vie (TTL2) sur la base desdites informations de topologie de manière autonome sans utiliser aucune des informations contenues dans ledit paquet de vérification de connectivité (CCP) ; et
e) transmettre ledit paquet de réponse de vérification de paquet (CCRP) depuis ledit second côté opposé dudit noeud (B) le long dudit second chemin circulaire unidirectionnel en sens inverse (PP2).

2. Procédé selon la revendication 1, dans lequel lesdites informations de topologie comprennent ledit nombre N.

3. Procédé selon la revendication 1, dans lequel lesdites informations de topologie comprennent une liste séquentielle dudit nombre N de noeuds (A, B, C, D, E, F).

4. Procédé selon l'une quelconque des revendications précédentes, comprenant en outre l'étape consistant à fournir lesdites informations de topologie audit au moins un noeud (B) lors du déploiement dudit réseau de communication (CN).

5. Procédé selon l'une quelconque des revendications précédentes, dans lequel ladite étape a) consiste à définir ledit premier champ de durée de vie (TTL1) égal audit nombre N, et dans lequel ladite étape d) consiste à définir ledit second champ de durée de vie (TTL2) égal audit nombre N.

6. Procédé selon l'une quelconque des revendications précédentes, dans lequel ledit noeud (B) comprend un point intermédiaire de maintenance d'origine (BE) situé sur ledit premier côté dudit noeud (B) et un point intermédiaire de maintenance cible (BW) situé sur ledit second côté opposé dudit noeud (B), lesdites étapes a) et b) étant exécutées par ledit point intermédiaire de maintenance d'origine (BE) et lesdites étapes c), d) et e) étant exécutées par ledit point intermédiaire de maintenance cible BW).

7. Procédé selon la revendication 6, dans lequel ladite étape a) consiste à insérer dans ledit paquet de vérification de connectivité (CCP) un identifiant de point intermédiaire de maintenance cible (TMIPid) et dans lequel ladite étape d) consiste à insérer dans ledit paquet de réponse de vérification de connectivité (CCRP) un identifiant de point intermédiaire de maintenance d'origine (OMIPid).

8. Procédé selon la revendication 7, dans lequel ledit procédé comprend en outre, sur chaque noeud dudit nombre N de noeuds (A, B, C, D, E, F), les étapes suivantes :
- recevoir ledit paquet de vérification de connectivité (CCP) sur un premier point intermédiaire de maintenance (XW) dudit noeud (X) depuis ledit premier chemin circulaire unidirectionnel (PP1) et lire ledit premier champ de durée de vie (TTL1) ;
- si ledit premier champ de durée de vie (TTL1) est supérieur à 1, diminuer ledit premier champ de durée de vie (TTL1) de 1 et transférer ledit paquet de vérification de connectivité de paquet (CCP) le long dudit premier chemin circulaire unidirectionnel (PP1) ;
- si ledit premier champ de durée de vie (TTL1) est égal à 1, lire ledit identifiant de point intermédiaire de maintenance cible (TMPIPid) et :
- si ledit identifiant de point intermédiaire de maintenance cible (TMPIPid) ne correspond pas à un identifiant (XWid) dudit premier point intermédiaire de maintenance (XW), écarter ledit paquet de vérification de connectivité (CCP) ; et
- si ledit identifiant de point intermédiaire de maintenance cible (TMPIPid) correspond audit identifiant (XWid) dudit premier point intermédiaire de maintenance (XW), déterminer que ledit premier point intermédiaire de maintenance (XW) est ledit point intermédiaire de maintenance cible (BW).

9. Procédé selon la revendication 7 ou 8, dans lequel ledit procédé, sur chaque noeud (Y) dudit nombre N de noeuds (A, B, C, D, E, F), comprend en outre les étapes suivantes :
- recevoir ledit paquet de réponse de vérification de connectivité (CCRP) sur un second point intermédiaire de maintenance (YE) dudit noeud (Y) depuis ledit second chemin circulaire unidirectionnel (PP2) et lire ledit second champ de durée de vie (TTL2) ;
- si ledit second champ de durée de vie (TTL2) est supérieur à 1, diminuer ledit second champ de durée de vie (TTL2) de 1 et transférer ledit paquet de réponse de vérification de connectivité de paquet (CCRP) le long dudit second chemin circulaire unidirectionnel (PP2) ;
- si ledit second champ de durée de vie (TTL2) est égal à 1, lire ledit identifiant de point intermédiaire de maintenance d'origine (OMIPid) et :
- si ledit identifiant de point intermédiaire d'origine (OMIPid) ne correspond pas à un identifiant (YEid) dudit second point intermédiaire de maintenance (YE), écarter ledit paquet de réponse de vérification de connectivité (CCRP) ; et
- si ledit identifiant de point intermédiaire d'origine (OMIPid) correspond audit identifiant (YEid) dudit second point intermédiaire de maintenance (YE), déterminer que ledit premier point intermédiaire de maintenance (YE) est ledit point intermédiaire de maintenance d'origine (BE).

10. Procédé selon l'une quelconque des revendications précédentes, dans lequel ladite étape a) consiste à générer un premier nombre de paquets de vérification de connectivité consécutifs (CCP) et ladite étape d) consiste à générer un paquet de réponse de vérification de connectivité (CCRP) en réponse à chaque paquet de vérification de connectivité (CCP) reçu, générant ainsi un second nombre de paquets de réponse de vérification de connectivité consécutifs (CCRP).

11. Procédé selon la revendication 10, comprenant en outre, sur ledit noeud (B), les étapes suivantes :
g) si au moins l'un dudit premier nombre de paquets de vérification de connectivité (CCP) est reçu sur ledit noeud (B), déterminer que ledit premier chemin de protection (PP1) est correctement configuré ; et
h) si aucun dudit premier nombre de paquets de vérification de connectivité (CCP) n'est reçu sur ledit noeud (B), déterminer que ledit premier chemin de protection (PP1) n'est pas correctement configuré.

12. Procédé selon la revendication 10 ou 11, comprenant en outre, sur ledit noeud (B), les étapes suivantes :
i) si au moins l'un dudit second nombre de paquets de réponse de vérification de connectivité (CCRP) est reçu sur ledit noeud (B), déterminer que ledit second chemin de protection (PP2) est correctement configuré ; et
j) si aucun dudit second nombre de paquets de réponse de vérification de connectivité (CCRP) n'est reçu sur ledit noeud (B), déterminer que ledit second chemin de protection (PP2) n'est pas correctement configuré.

13. Procédé selon la revendication 11 ou 12, consistant en outre, sur ledit noeud (B), à produire une réponse de vérification de connectivité (RSP) indicative d'un résultat de la vérification de connectivité sur ledit chemin circulaire bidirectionnel (PP1, PP2).

14. Noeud (B) pour un réseau de communication (CN), ledit réseau de communication (CN) comprenant un chemin circulaire bidirectionnel (PP1, PP2) attribué par l'intermédiaire dudit noeud (B), ledit chemin circulaire bidirectionnel (PP1, PP2) comprenant un premier chemin circulaire unidirectionnel (PP1) et un second chemin circulaire unidirectionnel en sens inverse (PP2), ledit noeud (B) étant doté d'informations de topologie relatives audit réseau de communication (CN), ledit noeud (B) étant configuré pour :
a) générer un paquet de vérification de connectivité (CCP) comprenant un premier champ de durée de vie (TTL1) et définir ledit premier champ de durée de vie (TTL1) sur la base desdites informations de topologie ;
b) transmettre ledit paquet de vérification de connectivité (CCP) depuis un premier côté dudit noeud (B) le long dudit premier chemin circulaire unidirectionnel (PP1) ;
c) recevoir ledit paquet de vérification de connectivité (CCP) sur un second côté dudit noeud (B) opposé audit premier côté dudit noeud (B), en provenance dudit premier chemin circulaire unidirectionnel (PP1) ;
d) en réponse audit paquet de vérification de connectivité (CCP), générer un paquet de réponse de vérification de connectivité (CCRP) comprenant un second champ de durée de vie (TTL2) et ledit définir ledit second champ de durée de vie (TTL2) sur la base desdites informations de topologie de manière autonome sans utiliser aucune des informations contenues dans ledit paquet de vérification de connectivité (CCP) ; et
e) transmettre ledit paquet de réponse de vérification de paquet (CCRP) depuis ledit second côté opposé dudit noeud (B) le long dudit second chemin circulaire unidirectionnel en sens inverse (PP2).

15. Réseau de communication (CN) comprenant un nombre N de noeuds (A, B, C, D, E, F) disposés selon une topologie en anneau, ledit réseau de communication (CN) comprenant un chemin circulaire bidirectionnel (PP1, PP2) réparti entre ledit nombre N de noeuds (A, B, C, D, E, F), au moins l'un (B) dudit nombre N de noeuds (A, B, C, D, E, F) étant un noeud selon la revendication 14.
